# EUROPÄISCHE PATENTSCHRIFT

(11) **EP 2 568 204 B1**
(45) Veröffentlichungstag und Bekanntmachung des Hinweises auf die Patenterteilung: **02.10.2013**
(21) Anmeldenummer: 12179240.2
(22) Anmeldetag: 03.08.2012
(51) Int. Cl.: F16K 31/06

(54) **Magnetventil und Verfahren zur Steuerung des Magnetventils**
Magnetic valve and method for controlling same
Soupape magnétique et procédé de commande de la soupape magnétique

(30) Priorität: 06.09.2011 DE 102011082195
(43) Veröffentlichungstag der Anmeldung: 13.03.2013
(73) Patentinhaber: Bayerische Motoren Werke Aktiengesellschaft, 80809 München (DE)
(72) Erfinder: Ritter, Stefan, 80993 München (DE)

(56) Entgegenhaltungen:
- DE-A1- 4 133 536
- DE-A1- 19 934 846
- DE-A1-102007 057 882

## Beschreibung

Die Erfindung betrifft ein Magnetventil mit den Merkmalen aus dem Oberbegriff des Patentanspruchs 1 und ein Verfahren zur Steuerung des Magnetventils mit den Verfahrensschritten gemäß Patentanspruch 4.

Zum technischen Umfeld wird beispielsweise auf die deutsche Offenlegungsschrift DE 199 34 846 A1, von der diese Erfindung ausgeht, hingewiesen. Aus dieser Schrift ist ein hydraulisches Ventil mit einem Elektromagneten bekannt. Der Elektromagnet ist zur Betätigung des hydraulischen Ventils, insbesondere zur Verwendung in einem Kraftfahrzeug, vorgesehen. Der Elektromagnet weist einen einen Ankerraum begrenzenden Polkern auf, mit einem im Ankerraum befindlichen bewegbaren Magnetanker, dessen minimaler axialer Abstand zum Polkern durch eine Antiklebscheibe bestimmt ist. Weiter weist er einen in einer zentralen Aufnahme des Magnetankers eingesetzten, durch eine zentrale Bohrung des Polkerns, vorzugsweise unter Bildung eines Radialspaltes, hindurchgeführten und aus einem magnetischen Material gefertigten Ankerstößel auf, über den vom Magnetanker ein Ventilglied des Hydraulischen Ventils betätigbar ist. Das durch den Elektromagnet betätigte hydraulische Ventil ist dadurch gekennzeichnet, dass der Ankerstößel rohrförmig aus einem ebenen Blech hergestellt ist und einstückig die durch nach radial außen geformtes Blechmaterial gebildete Antiklebscheibe aufweist.

Ein weiteres gattungsgemäßes Magnetventil ist aus der deutschen Patentschrift DE 198 18 126 B4 bekannt. Aus diesem Patent ist ein Magnetventil zur Schaltung wenigstens zweier verschiedener Schaltzustände bekannt, welches insbesondere zur Verwendung in einer Brennkraftmaschine geeignet ist. Das Magnetventil weist eine Spuleneinrichtung auf zur zeitweisen Aufnahme eines Magnetstroms, eine Steuereinrichtung zur Steuerung des zeitlichen Verlaufs der Größe und/oder der Orientierung des Magnetstroms in der Spuleneinrichtung, einen relativ zur Spuleneinrichtung in Richtung einer Achse beweglich gelagerten, magnetisierbaren Anker, der zeitweise in einem Magnetfeld der stromdurchflossenen Spuleneinrichtung angeordnet ist und wenigstens eine erste Polfläche mit einer senkrecht zur Achse ausgerichteten Komponente, einen relativ zur Spuleneinrichtung fest gelagerten, teilweise magnetisierbaren Polkern, der zeitweise und/oder teilweise in einem Magnetfeld der stromdurchflossenen Spuleneinrichtung angeordnet ist und wenigstens eine zweite Polfläche mit einer senkrecht zur Achse ausgerichteten Komponente, welche in Achsrichtung der ersten Polfläche zugewandt ist, wenigstens einer Hubbegrenzung zur Begrenzung der minimalen Beabstandung zwischen der ersten und der zweiten Polfläche auf einen Minimalwert, wobei dieser Minimalwert derart gewählt ist, dass der Magnetkraftanstieg im Bereich des geringen Abstandes nutzbar ist und wobei diese minimale Beabstandung zwischen dem Anker und dem Polkern einem ersten Ventilschaltzustand entspricht, einer Federeinrichtung zur zeitweisen Erzeugung einer vektoriellen Rückstellkraft auf den Anker, wobei diese Rückstellkraft im ersten Ventilzustand eine im Wesentlichen von der zweiten auf die erste Polfläche orientierte Kraftkomponente in Richtung der Achse aufweist.

Dokument DE 102007057882 offenbart ein elektromagnetisches Ventil.

Derartige aus dem Stand der Technik bekannte Magnetventile, werden beispielsweise häufig auch in Nockenwellenverstellsystemen für Ventiltriebe in Brennkraftmaschinen eingesetzt. Bei dieser Verwendung der Magnetventile kann es wegen urschmutzbedingter (Verschmutzung im Hydrauliköl durch mechanische Bearbeitung des Hydrauliksystems) Klemmer des Magnetventilregelkolbens zu Ausfällen der Brennkraftmaschine kommen. Um dieses Problem zu lösen, werden heute beispielsweise Filtersiebe im Hydraulikkreislauf eingesetzt oder es wird versucht, die festgeklemmten Partikel mittels erhöhter Magnet- und somit Kolbenverfahrkräften zu zerhacken. Eine weitere Möglichkeit bieten Regelstrategien für die Bestromung des Elektromagneten, die verhindern sollen, dass sich überhaupt Partikel an den Steuerkanten des Magnetventils ansammeln. All diese beispielhaft genannten Maßnahmen haben aber in irgendeiner Art und Weise ihre Nachteile, wenn man die Funktion des Gesamtsystems betrachtet:
⇒ Nachteile bei der Verstellgeschwindigkeit nach einem Kaltstart der Brennkraftmaschine.
⇒ Harte Partikel (z. B. Korund, Stahl, etc.) können mit den zur Verfügung stehenden Verstellkräften nicht zerhackt werden.
⇒ Geänderte Regelstrategien können zu Regelausfällen, Überschwingern und/oder vermehrtem Verschleiß führen.

Aufgabe der Erfindung ist es daher, eine Maßnahme aufzuzeigen, wie an den Steuerkanten festgesetzte Partikel auf einfache Art und Weise entfernt werden können.

Diese Aufgabe wird durch die Merkmale im kennzeichnenden Teil des Patentanspruchs 1 gelöst.

Wie Untersuchungen an klemmenden Magnetventilen zeigten, setzen sich die eingeklemmten Partikel fast ausschließlich an den Steuerkanten, die in Richtung des Elektromagnetteils zeigen, fest. Dies bedeutet, dass aufgrund eines klemmenden Partikels der Steuerkolben durch die Federkraft der Kolbenrückstellfeder nicht mehr zurückgeschoben werden kann. Durch die erfindungsgemäße Ausgestaltung ist es möglich, mit Hilfe der Ankerrückstellfeder den Anker "passiv", d. h. nicht elektromagnetisch, in seine hintere Anschlagsposition zu bringen, sobald ein Steuergerät ein Klemmen des Steuerkolbens detektiert hat. So kann durch erneutes Bestromen der Spule durch die zusätzlich zur Verfügung stehende Impulskraft eine um ein Vielfaches höhere Kraft auf den Steuerkolben übertragen werden, als es nur durch die Bestromung der Spule möglich wäre. Somit ist sichergestellt, dass die hierbei entstehende kinetische Energie für das Lösen des geklemmten Steuerkolbens genutzt werden kann. In Grundsatzversuchen zeigte sich, dass die Kraft auf den Steuerkolben um mindestens das 8-fache des Kraftbetrages ansteigt, wobei die Q/1-Kennlinie (Hydraulikmediumvolumenstrom/elektrische Stromstärke) und die F/s-Kennlinie (Kraft/Weg) der Kolbenrückstellfeder nahe am heutigen Serienstand bleiben.

Die Auslegung der Federkräfte gemäß Patentanspruch 2 hat sich als besonders zielführend herausgestellt.

Die Ausgestaltung gemäß Patentanspruch 3 erleichtert aufgrund von Reibungsreduzierung das Gleiten zwischen Stift und Anker, wodurch die Impulskraft besser ausgenutzt werden kann.

Mit dem erfindungsgemäßen Verfahren gemäß Patentanspruch 4 können an den in Richtung Elektromagnetteil gerichteten Steuerkanten festgesetzte Partikel erfindungsgemäß in einfacher Art und Weise gelöst werden.

Im Folgenden ist die Erfindung anhand eines bevorzugten Ausführungsbeispieles in 2 Figuren näher erläutert.
- Fig. 1: zeigt einen Schnitt durch ein erfindungsgemäßes Magnetventil.
- Fig. 2: zeigt einen Schnitt durch ein bekanntes Hydraulikteil für das Magnetventil.

Im Folgenden gelten in beiden Figuren für gleiche Bauelemente die gleichen Bezugsziffern.

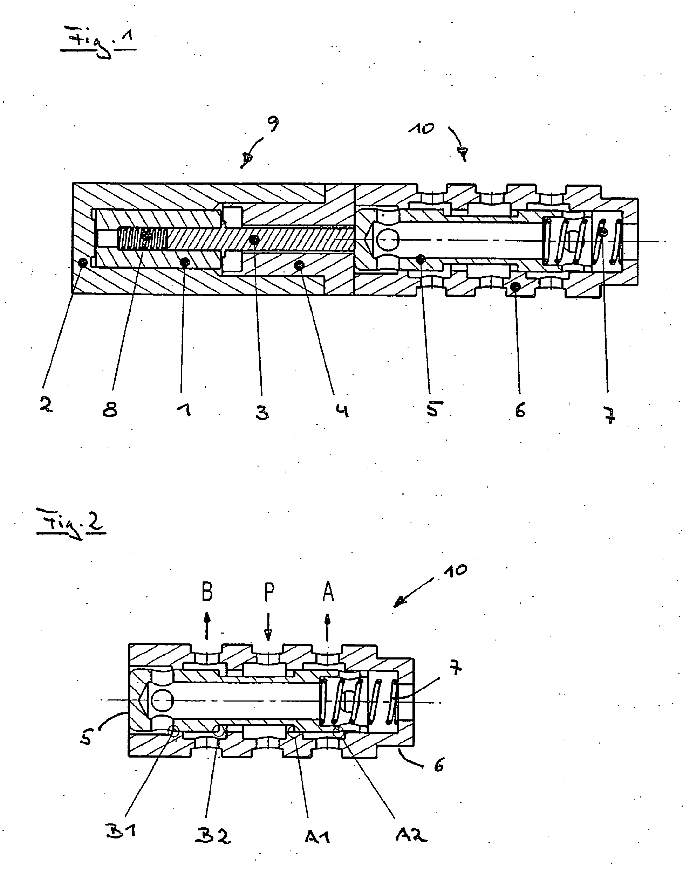

Fig. 1 zeigt einen Schnitt durch ein erfindungsgemäßes Magnetventil mit dem das Verfahren zur Steuerung des Magnetventils durchführbar ist. Das Magnetventil besteht im Wesentlichen aus einem Elektromagnetteil 9 und einem an das Elektromagnetteil 9 in axialer Richtung angeordneten Hydraulikteil 10. Schnittflächen sind in beiden Figuren schraffiert dargestellt.

Das Hydraulikteil 10 ist ein Bauelement, das das dem Fachmann aus dem Stand der Technik per se bekannt ist. Seine Funktion wird daher nicht bis in das letzte Detail erläutert. Der Elektromagnetteil 9 besteht im Wesentlichen aus einem Gehäuse 2 in dem eine in bekannter Weise, nicht explizit dargestellte Spule angeordnet ist, innerhalb der ein axial schiebebeweglich gelagerter, magnetisierbarer Anker 1 angeordnet ist. Der Anker 1 weist eine axiale Bohrung auf, in der ein Stift 3 angeordnet ist. In einem aus dem Anker 1 herausragenden Bereich des Stiftes 3 ist radial außen ein Polkern 4 angeordnet.

Bei Bestromung der Spule, beispielsweise durch ein Steuergerät, sind der Stift 3 und der Anker 1 axial in Richtung des Hydraulikteils 10 verschiebbar. Bei einer Verschiebung des Ankers 1 verschiebt dieser einen in einer Steuerbuchse 6 axial verschiebbaren Steuerkolben 5 gegen die Federkraft F₁ einer Kolbenrückstellfeder 7 in dem Hydraulikteil 10.

Erfindungsgemäß ist der Stift 3 in dem Anker 1 schiebebeweglich angeordnet und es ist eine an dem Anker 1 abgestützte Ankerrückstellfeder 8 vorgesehen, die den Stift 3 mit einer Federkraft F₂ in Richtung Hydraulikteil 10 drückt, bzw. bei Klemmen des Steuerkolbens 5 und Nichtbestromung der Spule den Anker 1 mit der Federkraft F₂ axial zurück gegen das Gehäuse 2 drückt.

Bevorzugt ist die Federkraft F₁ der Kolbenrückstellfeder 7 doppelt so groß bis zwanzigmal so groß wie die Federkraft F₂ der Ankerrückstellfeder 8. Ebenfalls bevorzugt weisen der Anker 1 und/oder der Stift 3 an ihren Gleitoberflächen eine Gleitbeschichtung auf. Hierbei kann es sich beispielsweise um eine PTFE- Beschichtung (Polytetrafluoräthylen, Teflon) handeln.

Fig. 2 zeigt einen Schnitt durch ein aus dem Stand der Technik bekanntes Hydraulikteil 10. In der Steuerbuchse 6 ist der axial schiebebewegliche Steuerkolben 5 angeordnet. Eine Verschiebung durch den Stift 3 des Elektromagnetteils 9 erfolgt gegen die Federkraft F₁ der Kolbenrückstellfeder 7. Ein Hydraulikmedienzulauf ist mit p beziffert. Als Steuermedium wird beispielsweise Hydrauliköl verwendet. Weiter weist das Hydraulikteil 10 zwei Steueröffnungen, beziffert mit A und B auf, mit deren Steuerkanten A1 hinten und B1 hinten sowie den Steuerkanten A2 vorne und B2 vorne.

Bei der Untersuchung von klemmenden Magnetventilen hat sich herausgestellt, dass Partikel beim Betrieb des Magnetventils fast immer an den Steuerkanten A1 hinten und B1 hinten abgelagert sind. Diese Partikelablagerungen führen zu einem Verklemmen des Steuerkolbens 5 in der Steuerbuchse 6. Um diese Partikel nun erfindungsgemäß zu entfernen, wird das erfindungsgemäße Verfahren zur Steuerung des Magnetventils vorgeschlagen, dass wenn der Steuerkolben 5 bei Bestromung der Spule in der Steuerbuchse 6 klemmt und dies von einem nicht dargestellten Steuergerät erkannt wird, die Bestromung gestoppt wird, bis der Stift 3 vom Steuerkolben 5 beabstandet ist und anschließend die Spule erneut bestromt wird. Durch diese Maßnahme wirkt nun nicht nur die elektromagnetische Kraft auf das Partikel, sondern durch den Impuls wirkt eine Kraft auf den Steuerkolben 5, der mindestens das 8-fache des üblichen elektromagnetischen Kraftbetrags aufweist. Durch diese erfindungsgemäße Maßnahme werden die festgesetzten Partikel an den Steuerkanten quasi herausgeschlagen und durch den Hydraulikmedienfluss bevorzugt durch ein Filter befördert. Wie bereits erwähnt funktioniert dieses Verfahren in erster Linie für die festgesetzten Partikel an den Steuerkanten A1 hinten und B1 hinten.

Betrachtung von klemmenden Magnetventilen in den vorderen Steuerkanten A2 vorne und B2 vorne:

Eine Fehlererkennung in einem Steuergerät kann eine Position eines geklemmten Partikels nicht detektieren. Das heißt, auch bei einem geklemmten Partikel an einer der vorderen Steuerkanten A2, B2 wird das Steuergerät das erfindungsgemäße "Losrütteln" auslösen. Bei eingeklemmten Partikeln an den vorderen Steuerkanten A2, B2 kann diese Funktion aber nicht wie beschrieben arbeiten, da die Wirkrichtung der Impulskraft nicht zum Öffnen der vorderen Steuerkanten A2, B2 führt. Die Impulskraft wird zum weiteren Schließen dieser vorderen Steuerkanten A2, B2 führen. Das kann entweder zum Abscheren des Partikels führen, was den geklemmten Steuerkolben 5 auch wieder freisetzen kann. Oder aber, es führt zum festeren Klemmen des Steuerkolbens 5. Die Klemmsituation wird dadurch weder verbessert noch verschlechtert. Daraus wird klar, dass die Lösefunktion mit Impulskraft an den hinteren Steuerkanten A1, B1 großes Potential bietet und an den vorderen Steuerkanten A2, B2 ist der Erfolg von der Größe der Späne abhängig. Ein derartiges hydraulisches System muss somit weiterhin unter möglichst sauberen Bedingungen betrieben werden, um das Klemmen des Steuerkolbens 5 gänzlich zu verhindern.

### Bezugszeichenliste:

- 1.: Anker
- 2.: Gehäuse
- 3.: Stift
- 4.: Polkern
- 5.: Steuerkolben
- 6.: Steuerbuchse
- 7.: Kolbenrückstellfeder
- 8.: Ankerrückstellfeder
- 9.: Elektromagnetteil
- 10.: Hydraulikteil

- A: Steueröffnung A
- A1: Steuerkante A hinten
- A2: Steuerkante A vorne
- B: Steueröffnung B
- B1: Steuerkante B hinten
- B2: Steuerkante A vorne
- P: Steuermedium Zulauf

## Patentansprüche

1. Magnetventil, bestehend aus einem Elektromagnetteil (9) und einem an das Elektromagnetteil (9) in axialer Richtung angeordneten Hydraulikteil (10), wobei der Elektromagnetteil (9) einen in einem Gehäuse (2) mit einer Spule axial schiebebeweglich gelagerten Anker (1) aufweist, in dem in axialer Richtung ein Stift (3) angeordnet ist, wobei um den Stift (3) radial außen, in einem aus dem Anker (1) herausragenden Bereich ein Polkern (4) angeordnet ist und der Stift (3) mit dem Anker (1) bei Bestromung der Spule durch ein Steuergerät axial in Richtung Hydraulikteil (10) verschiebbar ist, wobei der Anker (1) bei einer Verschiebung gegen eine Federkraft F₁ einer Kolbenrückstellfeder (7) auf einen, in einer Steuerbuchse (6) axial verschiebbaren Steuerkolben (5) drückt, **dadurch gekennzeichnet, dass** der Stift (3) schiebebeweglich in dem Anker (1) angeordnet ist und eine an dem Anker (1) abgestützte Ankerrückstellfeder (8) vorgesehen ist, die den Stift (3) mit einer Federkraft F₂ in Richtung Hydraulikteil (10) drückt.

2. Magnetventil nach Patentanspruch 1,
**dadurch gekennzeichnet,** das die Federkraft F₁ der Kolbenrückstellfeder (7) doppelt so groß bis zwanzigmal so groß wie die Federkraft F₂ der Ankerrückstellfeder (8) ist.

3. Magnetventil nach Patentanspruch 1 oder 2,
**dadurch gekennzeichnet, dass** der Anker (1) und/oder der Stift (3) an einer Gleitoberfläche eine Gleitbeschichtung aufweist.

4. Verfahren zur Steuerung eines Magnetventils nach einem der Patentansprüche 1 bis 3, wenn der Steuerkolben (5) bei Bestromung der Spule in der Steuerbuchse (6) klemmt,
**gekennzeichnet durch** folgende Verfahrensschritte:
- Stoppen der Bestromung, bis der Stift (3) vom Steuerkolben (5) beabstandet ist und
- erneutes Bestromen der Spule.

## Claims

1. A solenoid valve comprising an electromagnet part (9) and a hydraulic part (10) disposed in the axial direction on the electromagnet part (9), wherein the electromagnet part (9) has an armature (1) axially slidably mounted in a casing (2) comprising a coil, a pin (3) being disposed in the armature (1) in the axial direction, wherein a pole core (4) is disposed radially outside the pin (3) in a region projecting from the armature (1) and when the coil is energised the pin (3) and armature (1) is movable by a control device axially in the direction towards the hydraulic part (10), wherein the armature (1), when pushed against the force (F₁) of a piston return spring (7), presses a control piston (5) axially movable in a bush (6), **characterised in that** the pin (3) is slidably disposed in the armature (1) and an armature-return spring (8) abuts the armature (1) and presses the pin (3) with a spring force (F₂) in the direction towards the hydraulic part (10).

2. A solenoid valve according to claim 1,
**characterised in that** the force (F₁) of the piston return spring (7) is twice to twenty times as great as the force (F₂) of the armature return spring (8).

3. A solenoid valve according to claim 1 or claim 2,
**characterised in that** the armature (1) and/or the pin (3) have a sliding coating on a sliding surface.

4. A method of actuating a solenoid valve according to claims 1 to 3 when the control piston (5) is clamped in the bush (6) after the coil has been energised,
**characterised by** the following steps:
- disconnecting until the pin (3) is at a distance from the control piston (5) and
- reconnecting the coil.

## Revendications

1. Soupape magnétique constituée d'une partie d'électroaimant (9) et d'une partie hydraulique (10) montée axialement sur la partie d'électroaimant (9), cette partie d'électroaimant (9) comportant un induit (1) logé mobile en translation axial avec une bobine dans un boitier (2) et dans lequel une tige (3) est montée axialement un noyau polaire (4) étant monté autour de la tige (3) radialement vers l'extérieur, dans une zone dépassant de l'induit (1) et la tige (3) pouvant être déplacée axialement en translation avec l'induit (1) dans la direction de la partie hydraulique (10), lorsque la bobine est alimentée en courant, par un appareil de commande, lors d'une translation, l'induit (1) exerçant une pression, contre la force F₁ d'un ressort de rappel de piston (7) sur un piston de commande (5) déplaçable axialement dans un manchon de commande (6),
**caractérisée en ce que**
la tige (3) est montée coulissante dans l'induit (1) et il est prévu un ressort de rappel d'induit (8) s'appuyant contre l'induit (1) et qui exerce une pression sur la tige (3) avec une force F₂ en direction de la partie hydraulique (10).

2. Soupape magnétique conforme à la revendication 1,
**caractérisée en ce que**
la force F₁ du ressort de rappel du piston (7) est égale à deux à vingt fois la force F₂ du ressort de rappel de l'induit (8).

3. Soupape magnétique conforme à la revendication 1 ou 2,
**caractérisée en ce que**
l'induit (1) et/ou la tige (3) comporte un revêtement de glissement sur une surface de glissement.

4. Procédé de commande d'une soupape magnétique conforme à l'une des revendications 1 à 3, lorsque le piston de commande (5) se bloque dans le manchon de commande (6) lorsque la bobine est alimentée en courant,
**caractérisée en ce qu'**
il comporte les étapes consistant à :
- arrêter l'alimentation en courant jusqu'à ce que la tige (3) soit située à distance du piston de commande (5), et
- reprendre l'alimentation en courant de la bobine.
